(19) Europäisches Patentamt
European Patent Office
Office européen des brevets

(11) **EP 4 439 705 A1**

(12) **EUROPEAN PATENT APPLICATION**
published in accordance with Art. 153(4) EPC

(43) Date of publication:
**02.10.2024   Bulletin 2024/40**

(21) Application number: **23827555.6**

(22) Date of filing: **22.06.2023**

(51) International Patent Classification (IPC):
*H01M 4/134* $^{(2010.01)}$     *H01M 4/38* $^{(2006.01)}$
*H01M 4/62* $^{(2006.01)}$     *H01M 4/1395* $^{(2010.01)}$
*H01M 4/04* $^{(2006.01)}$     *H01M 10/0525* $^{(2010.01)}$
*H01M 4/02* $^{(2006.01)}$

(52) Cooperative Patent Classification (CPC):
H01M 4/02; H01M 4/04; H01M 4/134;
H01M 4/1395; H01M 4/38; H01M 4/62;
H01M 10/0525

(86) International application number:
**PCT/KR2023/008717**

(87) International publication number:
**WO 2023/249446 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.06.2022   KR 20220076797**

(71) Applicant: **LG Energy Solution, Ltd.**
**Seoul 07335 (KR)**

(72) Inventors:
• **PARK, Su Jin**
  **Daejeon 34122 (KR)**
• **LEE, Jaewook**
  **Daejeon 34122 (KR)**
• **KWON, Yohan**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**

(57)     The present application relates to a negative electrode for a lithium secondary battery, a method for manufacturing a negative electrode for a lithium secondary battery, and a lithium secondary battery including a negative electrode.

[Figure 1]

**Description**

[Technical Field]

The present application claims priority to and the benefit of Korean Patent Application No. 10-2022-0076797 filed in the Korean Intellectual Property Office on June 23, 2022, the entire contents of which are incorporated herein by reference.

The present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-containing particles having a high discharge capacity may be used as the negative electrode active material.

In particular, in response to the demand for high-density energy batteries in recent years, research is being actively conducted on a method for increasing a capacity by using a silicon-containing compound such as Si/C or SiOx having a capacity greater than by a factor of 10 or more, in comparison with graphite-based materials, as a negative electrode active material. When compared with graphite that is typically used, however, the silicon-containing compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-containing negative electrode, when the charging and discharging cycle is repeated, lithium ions are not uniformly charged in the depth direction of the negative electrode and reactions proceed on the surface, so that surface degradation is accelerated, and therefore, the performance needs to be improved in terms of battery cycle.

Moreover, when fabricating a negative electrode using a silicon-containing active material, it is important that a pore structure of the negative electrode is simple, and in the case of a negative electrode using a silicon-containing active material, it is known that the better the tortuosity, the better the diffusion resistance. However, when the porosity is unconditionally increased to improve tortuosity, the contact point with the negative electrode current collector layer is reduced, and the adhesion with the negative electrode current collector layer is lowered, resulting in a separation phenomenon, and the like, and there is a problem in that life characteristics are deteriorated.

In order to solve the above problems, various research is in progress, but there is a limit to the application because the performance of the battery may be rather deteriorated. Therefore, there is still a limit to the commercialization of manufacture of a negative electrode battery having a high silicon-containing compound content. As the ratio of the silicon-containing active material included in the silicon-containing active material layer increases, the reaction with lithium ions is concentrated on the surface of the negative electrode, so that the surface of the silicon-containing active material is damaged and life characteristics are deteriorated.

Therefore, it is necessary to develop a lithium secondary battery that improves the tortuosity of the negative electrode in the course of charging and discharging cycles and has excellent adhesion with the negative electrode current collector layer even when the silicon-containing compound is used as an active material.

Prior Art Document

(Patent Literature 1) Japanese Patent Application Publication No. 2009-080971

[Detailed Description of the Invention]

[Technical Problem]

The present application is intended to provide a negative electrode for a lithium secondary battery, a method for manufacturing a negative electrode for a lithium secondary battery, and a lithium secondary battery including a negative electrode capable of improving tortuosity in order to prevent electrode surface deterioration in the course of charging and discharging cycles while using a silicon-containing active material for the negative electrode, and improving cycle performance by further improving adhesion with a negative electrode current collector layer.

[Technical Solution]

An exemplary embodiment of the present specification provides a negative electrode for a lithium secondary battery including a negative electrode current collector layer; a first negative electrode active material layer provided on at least one surface of the negative electrode current collector layer; and a second negative electrode active material layer provided on a surface of the first negative electrode active material layer opposite to a surface of the first negative electrode active material layer facing the negative electrode current collector layer, wherein the first negative electrode active material layer has a porosity of 40% or less, the second negative electrode active material layer has a porosity greater than the porosity of the first negative electrode active material layer, the first negative electrode active material layer includes a first negative electrode active material layer composition including a first negative electrode active material, a first negative electrode conductive material, and a first negative electrode binder, the second negative electrode active material layer includes a second negative electrode active material layer composition including a second negative electrode active material, a second negative electrode conductive material, and a second negative electrode binder, the first negative electrode conductive material includes two or more kinds of conductive materials, and the second negative electrode conductive material includes one kind of a conductive material.

Another exemplary embodiment provides a method for manufacturing a negative electrode for a lithium secondary battery, the method including: preparing a negative electrode current collector layer; forming a first negative electrode active material layer by applying a first negative electrode active material layer composition on at least one surface of the negative electrode current collector layer; and forming a second negative electrode active material layer by applying a second negative electrode active material layer composition on a surface of the first negative electrode active material layer opposite to a surface of the first negative electrode active material layer facing the negative electrode current collector layer, wherein the first negative electrode active material layer has a porosity of 40% or less, the second negative electrode active material layer has a porosity greater than the porosity of the first negative electrode active material layer, the first negative electrode active material layer includes a first negative electrode active material layer composition including a first negative electrode active material, a first negative electrode conductive material, and a first negative electrode binder, the second negative electrode active material layer includes a second negative electrode active material layer composition including a second negative electrode active material, a second negative electrode conductive material, and a second negative electrode binder, the first negative electrode conductive material includes two or more kinds of conductive materials, and the second negative electrode conductive material includes one kind of a conductive material.

Finally, there is provided a lithium secondary battery including a positive electrode; the negative electrode for the lithium secondary battery according to the present application; a separator provided between the positive electrode and the negative electrode; and an electrolyte.

[Advantageous Effects]

The negative electrode for a lithium secondary battery according to an exemplary embodiment of the present invention has a double layer structure, the porosity of the first negative electrode active material layer is 40% or less, and the porosity of the second negative electrode active material layer is greater than the porosity of the first negative electrode active material layer. In this way, as the negative electrode is composed of a double layer, the porosity of the first negative electrode active material layer facing the negative electrode current collector layer is lowered to a certain range to increase contact points with the negative electrode current collector layer, thereby improving adhesion and life characteristics. In addition, the porosity of the second negative electrode active material layer is increased to a certain range to improve negative electrode tortuosity, thereby improving diffusion resistance.

That is, the present invention adjusts arrangement in the negative electrode active material layer according to an average particle diameter of the silicon-containing active material. Due to the above characteristics, it is possible to maintain the high-capacity characteristic, which is an advantage of the negative electrode including the silicon-containing active material, and at the same time, to prevent a separation phenomenon of an electrode to enhance the life characteristics as well.

In addition, in the negative electrode for a lithium secondary battery according to an exemplary embodiment of the present invention, the first negative electrode conductive material included in the first negative electrode active material layer includes two or more kinds of conductive materials, and the second negative electrode conductive material included in the second negative electrode active material layer includes one kind of conductive material.

In the lithium secondary battery, while the porosities of the first and second layers are adjusted as described above, and at the same time, the specific conductive materials are included in the first and second layers, so that while the life characteristics of the existing lithium secondary battery are not significantly affected, points available for charging and discharging increase, resulting in excellent output characteristics at high C-rate.

That is, for the negative electrode for a lithium secondary battery according to the present invention, the capacity characteristics are maximized by using the silicon-containing active material, the double layer structure is used to simplify the pore structure, each layer satisfies a specific porosity range, and at the same time, the specific conductive materials are used for each layer to increase the number of points available for charging and discharging, resulting in excellent output characteristics.

[Brief Description of Drawings]

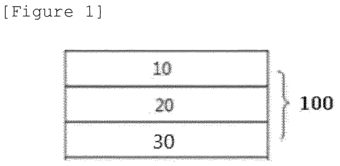

FIG. 1 shows a laminated structure of a negative electrode for a lithium secondary battery according to an exemplary embodiment of the present application.

<Explanation of Reference Numerals and Symbols>

> 10: second negative electrode active material layer
> 20: first negative electrode active material layer
> 30: negative electrode current collector layer

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery including a negative electrode current collector layer; a first negative electrode active material layer provided on one surface or both surfaces of the negative electrode current collector layer; and a second negative electrode active material layer provided on a surface opposite to a surface of the first negative electrode active material layer facing the negative electrode current collector layer, wherein the first negative electrode active material layer has a porosity 40% or less, wherein the second negative electrode active material layer has a porosity greater than the porosity of the first negative electrode active material layer, wherein the first negative electrode active material layer includes a first negative electrode active material layer composition including a first negative electrode active material, a first negative electrode conductive material, and a first negative electrode binder, wherein the second negative electrode active material layer includes a second negative electrode active material layer composition including a second negative electrode active material, a second negative electrode conductive material, and a second negative electrode binder, wherein the first negative electrode conductive material includes two or more kinds of conductive materials, and wherein the second negative electrode conductive material includes one kind of a conductive material.

The negative electrode for a lithium secondary battery according to the present application has the features of the double layer where the first negative electrode active material layer and second negative electrode active material layer satisfy the specific porosity ranges and the specific conductive materials are applied in certain contents, in order to address issues of simplification of a pore structure of a negative electrode, and improvements in adhesion to the negative electrode current collector layer and output characteristics, which issues are caused when a high content of silicon particles is applied to the negative electrode, while taking the advantages of an electrode to which the high content of silicon particles is applied as a single-layer active material.

In general, it is important to increase the porosity of the negative electrode for simplification of the negative electrode structure. However, in the case of a silicon-containing negative electrode, the porosity cannot be increased indefinitely due to the volume expansion issue, and the life is rather reduced if only the porosity is increased. Accordingly, the present application increases the porosity of the upper layer so as to improve tortuosity of the negative electrode, and at the same time, secures the life characteristics by decreasing the porosity range of the lower layer. In addition, the specific conductive materials are included in the first negative electrode active material layer and the second negative electrode active material layer, so that while the life characteristics of the existing lithium secondary battery are not significantly affected, points available for charging and discharging increase, resulting in excellent output characteristics at high C-rate.

FIG. 1 shows a laminated structure of a negative electrode for a lithium secondary battery according to an exemplary embodiment of the present application. Specifically, a negative electrode 100 for a lithium secondary battery can be seen which includes a first negative electrode active material layer 20 and a second negative electrode active material layer 10 on one surface of a negative electrode current collector layer 30. FIG. 1 shows that the first negative electrode active material layer is formed on one surface, but the first negative electrode active material layer may be formed on both surfaces of the negative electrode current collector layer.

Below, the negative electrode for a lithium secondary battery of the present invention will be described in more detail.

In an exemplary embodiment of the present application, there is provided a negative electrode for a lithium secondary battery including: a negative electrode current collector layer; a first negative electrode active material layer provided on one surface or both surfaces of the negative electrode current collector layer; and a second negative electrode active material layer provided on a surface opposite to a surface of the first negative electrode active material layer facing the negative electrode current collector layer.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 um or greater and 100 um or less.

However, the thicknesses may be variously modified depending on a type and use of the negative electrode used, and are not limited thereto.

In an exemplary embodiment of the present application, the first negative electrode active material layer may include a first negative electrode active material layer composition including a first negative electrode active material, a first negative electrode conductive material, and a first negative electrode binder, and the second negative electrode active material layer may include a second negative electrode active material layer composition including a second negative electrode active material, a second negative electrode conductive material, and a second negative electrode binder.

In an exemplary embodiment of the present application, there is provided the negative electrode for a lithium secondary battery in which the first negative electrode active material and the second negative electrode active material each include a silicon-containing active material including silicon particles having a silicon particle size distribution of 0.01 um or greater and 50 um or less, and the silicon-containing active material included in the first negative electrode active material layer has a D50 particle size equal to or smaller than a D50 particle size of the silicon-containing active material included in the second negative electrode active material layer.

In an exemplary embodiment of the present application, there is provided the negative electrode for a lithium secondary battery in which the silicon-containing active material includes one or more selected from the group consisting of $SiO_x$ (0<x<2), $SiO_x$ (x=0), SiC, and a Si alloy.

In an exemplary embodiment of the present application, the silicon-containing active material may include one or more selected from the group consisting of $SiO_x$ (x=0) and $SiO_x$ (0<x<2), and may include the $SiO_x$ (x=0) in an amount of 95 parts by weight or more on the basis of 100 parts by weight of the silicon-containing active material.

In an exemplary embodiment of the present application, the silicon-containing active material may include one or more selected from the group consisting of $SiO_x$ (x=0) and $SiO_x$ (0<x<2), and may include $SiO_x$ (x=0) in an amount of 95 parts by weight or more, preferably 97 parts by weight or more, and more preferably 99 parts by weight or more, and 100 parts by weight or less, on the basis of 100 parts by weight of the silicon-containing active material.

In an exemplary embodiment of the present application, pure silicon (Si) particles may be particularly used as the silicon-containing active material. The use of pure silicon (Si) as the silicon-containing active material may mean that, on the basis of 100 parts by weight of the total silicon-containing active material as described above, pure Si particles ($SiO_x$ (x=0)) not bonded to other particles or elements are included within the above range.

In an exemplary embodiment of the present application, the silicon-containing active material may be composed of $SiO_x$ (x=0).

The negative electrode for a lithium secondary battery according to the present application includes the above-described silicon-containing active material in the first negative electrode active material layer and the second negative electrode active material layer, and specifically, includes pure silicon particles containing 95 parts by weight or more of $SiO_x$ (x=0). In this case, when the high content of pure silicon particles is included, the capacity characteristics are excellent, and in order to solve deterioration in life characteristics due to resulting simplification of the pore structure, the second negative electrode active material layer is included.

An average particle diameter (D50) of the silicon-containing active material of the present invention may be 3 um to 10 um, specifically 4 um to 8 $\mu$m, and more specifically 5 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In particular, in the negative electrode for a lithium secondary battery according to the present application, the porosity of the first negative electrode active material layer is 40% or less, and the porosity of the second negative electrode active material layer is greater than the porosity of the first negative electrode active material layer.

The porosity control described above affects the overall composition and content of the first negative electrode active material layer composition and the second negative electrode active material layer composition, but are mainly affected by the D50 particle size of the silicon-containing active material, the type of conductive material and the like included in the first negative electrode active material layer composition and the second negative electrode active material layer composition. That is, as one of the methods for realizing the porosity, active materials having different particle sizes may be arranged, and the particle size may be adjusted by adjusting the content of the conductive material.

In an exemplary embodiment of the present application, there is provided the negative electrode for a lithium secondary battery in which the D50 particle size of the silicon-containing active material included in the first negative electrode active material layer is 5 um or less, and the D50 particle size of the silicon-containing active material included in the second negative electrode active material layer is 5 um or greater.

In another exemplary embodiment, the D50 particle size of the silicon-containing active material included in the first negative electrode active material layer may satisfy a range of 5 um or less, and 0.5 um or greater, preferably 1 um or greater, and more preferably 3 um or greater.

In another exemplary embodiment, the D50 particle size of the silicon-containing active material included in the second negative electrode active material layer may satisfy a range of 5 um or greater, preferably 6 um or greater, and more preferably 7 um or greater, and 15 um or less, and preferably 10 um or less.

In an exemplary embodiment of the present application, the porosity of the first negative electrode active material layer may satisfy a range of 40% or less, and preferably 35% or less, and 10% or greater, and preferably 20% or greater.

In an exemplary embodiment of the present application, the porosity of the second negative electrode active material layer may satisfy a range of 42% or greater, and preferably 45% or greater, and 90% or less, and preferably 80% or less.

When the ranges of the particle size distribution and the porosity described above are satisfied, respectively, the negative electrode for a lithium secondary battery according to the present application has the following features. Specifically, when the porosity of the surface portion (second negative electrode active material layer) in the above range is satisfied, the pore structure is simplified to improve the phenomenon that the reaction of lithium ions and silicon-containing active materials is concentrated only on the surface, resulting in improvement in diffusion resistance. In addition, the porosity of the portion (first negative electrode active material layer) facing the negative electrode current collector satisfies the above range to improve the adhesion to the negative electrode current collector layer, so that the adhesion is increased even if the charge/discharge cycle is continued, resulting in improvement in life characteristics.

In an exemplary embodiment of the present application, the silicon-containing active material generally has a characteristic BET surface area. The BET surface area of the silicon-containing active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET surface area is measured in accordance with DIN 66131 (using nitrogen).

In an exemplary embodiment of the present application, the silicon-containing active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the silicon-containing active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

[Equation 1]

$$4\pi A/P^2$$

In an exemplary embodiment of the present application, based on 100 parts by weight of the first negative electrode active material layer composition, the first negative electrode active material may be included in an amount of 80 parts by weight or less, and based on 100 parts by weight of the second negative electrode active material layer composition, the second negative electrode active material may be included in an amount of 80 parts by weight or more.

In another exemplary embodiment, the first negative electrode active material may be included in an amount of 80 parts by weight or less, and 60 parts by weight or more, preferably 65 parts by weight or more, and most preferably 70 parts by weight or more, based on 100 parts by weight of the first negative electrode active material layer composition.

In another exemplary embodiment, based on 100 parts by weight of the second negative electrode active material layer composition, the second negative electrode active material may be included in an amount of 80 parts by weight or more, preferably 85 parts by weight or more, and more preferably 88 parts by weight or more, and, and 100 parts by weight or less, and preferably 95 parts by weight or less.

The first negative electrode active material layer composition and the second negative electrode active material layer composition according to the present application use a silicon-containing active material having a significantly high capacity within the above-described range, respectively, improving capacity characteristics.

In particular, the range of the first negative electrode active material included in the first negative electrode active material layer is adjusted to the range described above, so that the problems of surface deterioration during charging and discharging, life characteristics, and securing a conductive path are solved without deteriorating capacity performance of the overall negative electrode.

In the related art, it is general to use only graphite-based compounds as the negative electrode active material.

However, in recent years, as the demand for high-capacity batteries is increasing, attempts to mix and use silicon-containing compounds are increasing in order to increase capacity. However, the silicon-containing compounds have limitations in that the volume rapidly expands during the charging/discharging, resulting in damage to the conductive path formed in the negative electrode active material layer to degrade the performance of the battery.

In addition, in order to adjust the porosity range as described above, when a silicon-containing active material of a certain particle size is included within the above-described range, a conductive path is not secured due to volume expansion during charging and discharging, so output characteristics are deteriorated, and life characteristics are deteriorated accordingly.

Therefore, in an exemplary embodiment of the present application, the first negative electrode conductive material includes two or more kinds of conductive materials, and the second negative electrode conductive material includes one kind of conductive material, thereby solving the above problems.

In an exemplary embodiment of the present application, there is provided the negative electrode for a lithium secondary battery in which the first negative electrode conductive material includes one or more selected from the group consisting of a point-like conductive material, a linear conductive material, and a planar conductive material, and the second negative electrode conductive material includes a linear conductive material.

In an exemplary embodiment of the present application, there is provided the negative electrode for a lithium secondary battery in which the first negative electrode conductive material includes two or more selected from the group consisting of a point-like conductive material, a linear conductive material, and a planar conductive material, and the second negative electrode conductive material includes a linear conductive material.

In an exemplary embodiment of the present application, the first negative electrode conductive material may include two or more selected from the group consisting of a point-like conductive material, a linear conductive material, and a planar conductive material, and the second negative electrode conductive material may be composed of a linear conductive material.

That is, two or more kinds of conductive materials are included in the active material layer region (first negative electrode active material layer) facing the negative electrode current collector of the negative electrode for a lithium secondary battery to increase points available for charging and discharging, resulting in excellent output characteristics at a high C-rate. At the same time, a small amount of one kind of linear conductive material is included in the second negative electrode active material layer to secure a conductive path and maximize the content of the silicon-containing active material.

In an exemplary embodiment of the present application, the first negative electrode conductive material is composed of a point-like conductive material, a linear conductive material, and a planar conductive material.

In an exemplary embodiment of the present application, the first negative electrode conductive material is composed of a linear conductive material and a planar conductive material.

In an exemplary embodiment of the present application, the first negative electrode conductive material and the second negative electrode conductive material may use materials that can be generally used in the art without limitation, and specifically, is selected from the group consisting of a point-like conductive material, a planar conductive material, and a linear conductive material.

In an exemplary embodiment of the present application, the point-like conductive material refers to a conductive material that may be used for improving conductivity of the negative electrode, has conductivity without causing a chemical change and has a point or spherical shape. Specifically, the point-like conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, the particle diameter of the point-like conductive material may be 10 nm to 100 nm, preferably 20 nm to 90 nm, and more preferably 20 nm to 60 nm.

In an exemplary embodiment of the present application, the planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2/g$ or greater.

In another exemplary embodiment, the planar conductive material may have a BET specific surface area of 5 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

In another exemplary embodiment, the planar conductive material is a planar conductive material with a high specific surface area, and the BET specific surface area may satisfy a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may satisfy a range of 5 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the first negative electrode conductive material may satisfy a range of 1 part by weight or more and 40 parts by weight or less, on the basis of 100 parts by weight of the first negative electrode active material layer composition.

In another exemplary embodiment, the first negative electrode conductive material may be included in an amount of 1 part by weight or more and 40 parts by weight or less, preferably 10 parts by weight or more and 30 parts by weight or less, and more preferably 15 parts by weight or more and 25 parts by weight or less, on the basis of 100 parts by weight of the first negative electrode active material layer composition.

In an exemplary embodiment of the present application, the second negative electrode conductive material may satisfy a range of 0.01 part by weight or more and 5 parts by weight or less, on the basis of 100 parts by weight of the second negative electrode active material layer composition.

In another exemplary embodiment, the second negative electrode conductive material may be included in an amount of 0.01 part by weight or more and 5 parts by weight or less, preferably 0.03 part by weight or more and 3 parts by weight or less, and more preferably 0.1 part by weight or more and 2 parts by weight or less, on the basis of 100 parts by weight of the second negative electrode active material layer composition.

In an exemplary embodiment of the present application, the first negative electrode conductive material may include a point-like conductive material, a planar conductive material, and a linear conductive material, and a ratio of the point-like conductive material: the planar conductive material: the linear conductive material may satisfy 1:1:0.01 to 1:1:1.

In an exemplary embodiment of the present application, the point-like conductive material may satisfy a range of 1 part by weight or more and 60 parts by weight or less, preferably 5 parts by weight or more and 50 parts by weight or less, and more preferably 10 parts by weight or more and 50 parts by weight or less, on the basis of 100 parts by weight of the first negative electrode conductive material.

In an exemplary embodiment of the present application, the planar conductive material may satisfy a range of 1 part by weight or more and 60 parts by weight or less, preferably 5 parts by weight or more and 50 parts by weight or less, and more preferably 10 parts by weight or more and 50 parts by weight or less, on the basis of 100 parts by weight of the first negative electrode conductive material.

In an exemplary embodiment of the present application, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the first negative electrode conductive material.

In an exemplary embodiment of the present application, the first negative electrode conductive material may include a linear conductive material, and a planar conductive material.

In an exemplary embodiment of the present application, the first negative electrode conductive material may include a linear conductive material and a planar conductive material, and a ratio of the linear conductive material to the planar conductive material may satisfy 0.01:1 to 0.1:1.

In an exemplary embodiment of the present application, as the first negative electrode conductive material particularly includes the linear conductive material and the planar conductive material and the composition and ratio described above are satisfied, respectively, the life characteristics of an existing lithium secondary battery are not significantly affected, and points available for charging and discharging increase, resulting in excellent output characteristics at a high C-rate.

The first and second negative electrode conductive materials according to the present application each have a completely different configuration from a positive electrode conductive material that is applied to the positive electrode. That is, the first and second negative electrode conductive materials according to the present application serve to hold the contact between silicon-containing active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the first and second negative electrode conductive materials according to the present application are applied to a silicon-containing active material, and have a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the first negative electrode conductive material that is applied together with the silicon-containing active material as in the present invention, in terms of configuration and role.

In an exemplary embodiment of the present application, the first and second negative electrode binders may each include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The first and second negative electrode binders according to an exemplary embodiment of the present application serve to hold the active material and the conductive material in order to prevent distortion and structural deformation of the negative electrode structure in volume expansion and relaxation of the first and second negative electrode active materials. When such roles are satisfied, all of the general binders can be applied. Specifically, an aqueous binder may be used, and more specifically, a PAM-based binder may be used.

In an exemplary embodiment of the present application, the first and second negative electrode binders may be included in an amount of 30 parts by weight or less, preferably 25 parts by weight or less, and more preferably 20 parts by weight or less, and 5 parts by weight or more, and 10 parts by weight or more, on the basis of 100 parts by weight of the first and second negative electrode active material layer composition.

In particular, in the present application, based on 100 parts by weight of the first negative electrode active material layer composition, the first negative electrode binder may be included in an amount of 10 parts by weight or more, and based on 100 parts by weight of the second negative electrode active material layer composition, the second negative electrode binder may be included in an amount of 10 parts by weight or less.

In an exemplary embodiment of the present application, the first negative electrode binder may be included in an amount of 10 parts by weight or more, preferably 12 parts by weight or more, and more preferably 15 parts by weight or more, and 30 part by weight or less, and preferably 25 parts by weight or less, on the basis of 100 parts by weight of the first negative electrode active material layer composition.

In an exemplary embodiment of the present application, the second negative electrode binder may be included in an amount of 10 parts by weight or less, and 1 part by weight or more, preferably 3 parts by weight or more, and most preferably 5 parts by weight or more, on the basis of 100 parts by weight of the second negative electrode active material layer composition.

In particular, when the content of the first negative electrode binder included in the first negative electrode active material layer is increased to 10 parts by weight or more and the content of the second negative electrode binder is lowered to 10 parts by weight or less as described above, a total content of the binder can be maintained within a certain range. In particular, by increasing the binder content on the negative electrode current collector layer side, the adhesion to the negative electrode current collector layer can be further enhanced, and accordingly, the life characteristics of the lithium secondary battery can be further improved.

In an exemplary embodiment of the present application, there is provided the negative electrode for a lithium secondary battery in which an adhesion of a surface of the first negative electrode active material layer facing the negative electrode current collector layer satisfies 100 gf/5 mm or greater and 500 gf/5 mm or less under conditions of 25°C and a normal pressure.

In another exemplary embodiment, the adhesion of the surface of the first negative electrode active material layer facing the negative electrode current collector layer may satisfy 100 gf/5 mm or greater and 500 gf/5 mm or less, preferably 300 gf/5 mm or greater and 450 gf/5 mm or less, and more preferably 350 gf/5 mm or greater and 430 gf/5 mm or less under conditions of 25°C and a normal pressure.

In particular, the negative electrode according to the present application improves the adhesion as described above by adjusting the content of the negative electrode binder to a predetermined range or more with the first negative electrode active material layer composition described above.

In addition, even when expansion and contraction of the silicon-containing active material are repeated by repeating charging and discharging of the negative electrode, the negative electrode binder of a specific composition is applied to maintain the conductive network and prevent the disconnection, thereby suppressing the increase in resistance.

The adhesion was measured using a 3M 9070 tape as a peel strength tester under conditions of 90° and at a speed of 5 mm/s. Specifically, one surface of the first negative electrode active material layer of the negative electrode for a lithium secondary battery was bonded to one surface of a slide glass (3M 9070 tape) to which an adhesive film is attached. Then, the negative electrode active material layer was attached by reciprocating 5 to 10 times with a 2 kg rubber roller, and the adhesion (peeling force) was measured at an angle of 90° and at a speed of 5 mm/s. At this time, the adhesion can be measured under conditions of 25°C and normal pressure.

Specifically, the measurement was performed for a 5 mm x 15 cm electrode under conditions of 25°C and normal pressure.

In an exemplary embodiment of the present application, the normal pressure may mean a pressure in a state where a specific pressure is not applied or lowered, and may be used as the same meaning as the atmospheric pressure. The normal pressure can be usually expressed as 1 atm.

In an exemplary embodiment of the present application, there is provided the negative electrode for a lithium secondary battery in which a thickness of the first negative electrode active material layer is 10 um or greater and 200 um or less and a thickness of the second negative electrode active material layer is 10 um or greater and 100 um or less.

In an exemplary embodiment of the present application, there is provided the negative electrode for a lithium secondary battery in which a loading amount (a) of the first negative electrode active material layer composition satisfies two times or more than a loading amount (b) of the second negative electrode active material layer composition.

In another exemplary embodiment, the loading amount (a) of the first negative electrode active material layer composition may satisfy a range of 2.0 times or more and 10 times or less, preferably 2.2 times or more and 6 times or less than the loading amount (b) of the second negative electrode active material layer composition.

The loading amount may mean a weight of the composition for forming the negative electrode active material layer, and specifically, the loading amount of the composition may have the same meaning as the loading amount of the slurry containing the composition.

In an exemplary embodiment of the present application, the loading amount (a) of the first negative electrode active material layer composition may satisfy a range of 2 mg/cm$^2$ or more and 5 mg/cm$^2$ or less, and preferably 2.2 mg/cm$^2$ or more and 4 mg/cm$^2$ or less.

In an exemplary embodiment of the present application, the loading amount (b) of the second negative electrode active material layer composition may satisfy a range of 0.5 mg/cm$^2$ or more and 1.5 mg/cm$^2$ or less, and preferably 0.8 mg/cm$^2$ or more and 1.3 mg/cm$^2$ or less.

When the first negative electrode active material layer composition and the second negative electrode active material layer composition have the loading amounts described above, the ratio of the active materials included in the first negative electrode active material layer and the second negative electrode active material layer may be adjusted. That is, the capacity characteristics can be optimized by adjusting the amount of the first negative electrode active material included in the first negative electrode active material layer, and at the same time, the surface reaction of the negative electrode can be suppressed to enhance the life characteristics without lowering the capacity characteristics by adjusting accordingly the amount of the second negative electrode active material included in the second negative electrode active material layer.

In an exemplary embodiment of the present application, the negative electrode for a lithium secondary battery may be a pre-lithiated negative electrode.

An exemplary embodiment of the present application provides a method for manufacturing a negative electrode for a lithium secondary battery, the method including: preparing a negative electrode current collector layer; forming a first negative electrode active material layer by applying a first negative electrode active material layer composition on one surface or both surfaces of the negative electrode current collector layer; and forming a second negative electrode active material layer by applying a second negative electrode active material layer composition on a surface opposite to a surface of the first negative electrode active material layer facing the negative electrode current collector layer, wherein the second negative electrode active material layer has a porosity of 50% or greater, wherein the first negative electrode active material layer has a porosity 40% or less, wherein the first negative electrode active material layer includes a first negative electrode active material layer composition including a first negative electrode active material, a first negative electrode conductive material, and a first negative electrode binder, wherein the second negative electrode active material layer includes a second negative electrode active material layer composition including a second negative electrode active material, a second negative electrode conductive material, and a second negative electrode binder, wherein the first negative electrode conductive material includes two or more kinds of conductive materials, and wherein the second negative electrode conductive material includes one kind of a conductive material.

In the method for manufacturing a negative electrode, the above-described descriptions may be applied to the composition and content included in each step.

An exemplary embodiment of the present application includes forming a first negative electrode active material layer by applying the first negative electrode active material layer composition on one surface or both surfaces of the negative electrode current collector layer.

That is, this step is forming an active material layer on the negative electrode current collector layer, and mean forming an active material layer on a surface (lower layer part), which is facing the current collector layer, of a double layer structure.

In an exemplary embodiment of the present application, the applying of the first negative electrode active material layer composition may include applying and drying a first negative electrode slurry including a first negative electrode active material layer composition, and a negative electrode slurry solvent.

In this case, a solid content of the first negative electrode slurry may satisfy a range of 10% to 40%.

In an exemplary embodiment of the present application, the forming of the first negative electrode active material layer may include mixing the first negative electrode slurry; and coating the mixed first negative electrode slurry on one surface or both surfaces of the negative electrode current collector layer, and the coating may be performed using a coating method that is commonly used in the art.

An exemplary embodiment of the present application includes forming a second negative electrode active material by applying a second negative electrode active material layer composition to a surface opposite to a surface of the first negative electrode active material layer facing the negative electrode current collector layer.

That is, this step is forming a second negative electrode active material layer on the first negative electrode active material layer, and may mean forming an active material layer on a surface (upper layer part), which is apart from the current collector layer, of the double layer structure.

In an exemplary embodiment of the present application, the applying of the second negative electrode active material layer composition may include applying and drying a second negative electrode slurry including a second negative electrode active material layer composition, and a negative electrode slurry solvent.

In this case, a solid content of the second negative electrode slurry may satisfy a range of 10% to 40%.

In an exemplary embodiment of the present application, there is provided the method for manufacturing a negative electrode for a lithium secondary battery in which the forming of the second negative electrode active material layer may include mixing the second negative electrode slurry, and coating the mixed second negative electrode slurry on a surface opposite to a surface of the first negative electrode active material layer facing the negative electrode current collector layer.

The coating may be performed using a coating method that is commonly used in the art.

The description of the forming of the first negative electrode active material layer may be applied to the forming of the second negative electrode active material layer in the same manner.

In an exemplary embodiment of the present application, there is provided the method for manufacturing a negative electrode for a lithium secondary battery in which the forming of the second negative electrode active material layer on the first negative electrode active material layer may include a wet on dry process, or a wet on wet process.

In an exemplary embodiment of the present application, the wet on dry process may mean a process of applying the first negative electrode active material layer composition, completely drying the composition, and then applying the second negative electrode active material layer composition thereon, and the wet on wet process means a process of applying the first negative electrode active material layer composition and then applying the second negative electrode active material layer composition thereon without drying.

In particular, the wet on dry process is to apply the first negative electrode active material layer composition, to completely dry the composition, and then to apply the second negative electrode active material layer composition thereon, making it possible for the first negative electrode active material layer and the second negative electrode active material layer to have a clear boundary. Accordingly, the compositions included in the first negative electrode active material layer and the second negative electrode active material layer are not mixed, making it possible to configure a double layer.

In an exemplary embodiment of the present application, the negative electrode slurry solvent may be used without limitation as long as it can dissolve the first negative electrode active material layer composition and the second negative electrode active material layer composition, and specifically, water or NMP may be used.

In an exemplary embodiment of the present application, there is provided the method for manufacturing a negative electrode for a lithium secondary battery, the method including pre-lithiating a negative electrode in which the first negative electrode active material layer and the second negative electrode active material layer are formed on the negative electrode current collector, wherein the pre-lithiating of the negative electrode includes a lithium electroplating process, a lithium metal transfer process, a lithium metal deposition process, or a stabilized lithium metal powder (SLMP) coating process.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesion of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

**<Manufacture of Negative Electrode>**

<u>**Example 1: Manufacture of Negative Electrode Manufacture of First Negative Electrode Active**</u>

**Material Layer**

A first negative electrode active material layer composition was prepared using Si (average particle diameter (D50): 5 um) as a silicon-containing active material, a first conductive material, a second conductive material, and polyacrylamide as a binder in a weight ratio of 80:9.6:0.4:10. A first negative electrode slurry was manufactured by adding the composition to distilled water as a solvent for forming a negative electrode slurry (solid concentration: 25 wt%).

The first conductive material was plate-like graphite (specific surface area: 17 m$^2$/g, average particle diameter (D50): 3.5 um), and the second conductive material was SWCNT.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The first negative electrode slurry was coated on both surfaces of a copper current collector (thickness: 8 um) serving as a negative electrode current collector with a loading amount of 2.75 mg/cm$^2$, which was then roll-pressed and dried in a vacuum oven at 130°C for 10 hours to form a first negative electrode active material layer (thickness: 33 um) (porosity: 35%).


**Manufacture of Second Negative Electrode Active Material Layer**

A second negative electrode active material layer composition was prepared using Si (average particle diameter (D50): 5 um) as a silicon-containing active material, SWCNT, and polyacrylamide as a binder in a weight ratio of 89:1:10. A second negative electrode slurry was manufactured by adding the composition to distilled water as a solvent for forming a negative electrode slurry (solid concentration: 25 wt%).

As a mixing method, the SWCNT, the binder, and water were dispersed at 2500 rpm for 30 minutes by using a homo mixer, the active material was added thereto, and the resultant mixture was dispersed at 2500 rpm for 30 minutes to manufacture a slurry.

The second negative electrode slurry was coated on the first negative electrode active material layer with a loading amount of 1 mg/cm$^2$, which was then roll-pressed and dried in a vacuum oven at 130°C for 10 hours to form a second negative electrode active material layer (thickness: 15 um) (porosity: 45%).

As a result, a negative electrode was manufactured in which the first negative electrode active material layer and the second negative electrode active material layer were sequentially stacked on the negative electrode current collector layer.

Negative electrodes were manufactured in the same manner as in Example 1, except that, in Example 1, the compositions and contents in Table 1 below were used. In Table 1 below, the third conductive material was carbon black C (specific surface area: 58 m$^2$/g, average particle diameter (D50): 37 nm).

[Table 1]

|  | First negative electrode active material layer | | Second negative electrode active material layer | |
| --- | --- | --- | --- | --- |
|  | First negative electrode active material layer composition | Porosity | Second negative electrode active material layer composition | Porosity |
| Example 1 | Si (average particle diameter (D50): 5 μm), first conductive material, second conductive material and binder = 80:9.6:0.4:10 | 35% | Si (average particle diameter (D50): 5 μm), SWCNT and polyacrylamide as binder = 89:1:10 | 45% |
| Example 2 | Si (average particle diameter (D50): 5 μm), first conductive material, second conductive material, third conductive material and binder = 70:9.8:10:0.2:10 | 35% | Same as Example 1 | 45% |
| Example 3 | Same as Example 1 | 35% | Si (average particle diameter (D50): 8 μm), SWCNT and polyacrylamide as binder = 89:1:10 | 50% |
| Example 4 | Same as Example 2 | 35% | Same as Example 3 | 50% |

(continued)

| | | First negative electrode active material layer | | Second negative electrode active material layer | |
| --- | --- | --- | --- | --- | --- |
| | | First negative electrode active material layer composition | Porosity | Second negative electrode active material layer composition | Porosity |
| Example 5 | | Same as Example 1 | 35% | Si (average particle diameter (D50): 5 $\mu$m), third conductive material and polyacrylamide as binder = 85:5:10 | 43% |
| Example 6 | | Si (average particle diameter (D50): 5 $\mu$m), first conductive material, second conductive material, and binder = 75:9.6:0.4:15 | 35% | Si (average particle diameter (D50) : 5 $\mu$m), SWCNT and polyacrylamide as binder = 89:1:10 | 45% |
| Example 7 | | Same as Example 6 | 35% | Si (average particle diameter (D50): 8 $\mu$m), SWCNT and polyacrylamide as binder = 89:1:10 | 50% |
| Comparative Example 1 | | Si (average particle diameter (D50): 5 $\mu$m), SWCNT and polyacrylamide as binder = 89:1:10 | 45% | Si (average particle diameter (D50): 5 $\mu$m), first conductive material, second conductive material and binder = 80:9.6:0.4:10 | 35% |
| Comparative Example 2 | | Si (average particle diameter (D50): 5 $\mu$m), SWCNT and polyacrylamide as binder = 89:1:10 | 45% | Si (average particle diameter (D50): 5 $\mu$m), first conductive material, second conductive material, third conductive material and binder = 70:9.8:10:0.2:10 | 35% |
| Comparative Example 3 | | Negative electrode active material layer of single layer: Si (average particle diameter (D50): 3.5 $\mu$m), first conductive material, second conductive material, and binder = 80:9.6:0.4:10 | | | 35% |
| Comparative Example 4 | | Negative electrode active material layer of single layer: Si (average particle diameter (D50): 5 $\mu$m), SWCNT and binder = 89:1:10 | | | 35% |
| Comparative Example 5 | | Negative electrode active material layer of single layer: Si (average particle diameter (D50): 8 $\mu$m), SWCNT and binder = 89:1:10 | | | 50% |

### <Manufacture of Secondary Battery>

A positive electrode slurry was prepared by adding $LiNi_{0.6}Co_{0.2}Mn_{0.2}O_2$ (average particle diameter (D50) : 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry in a weight ratio of 97:1.5:1.5 (solid content concentration: 78 wt%).

The positive electrode slurry was coated on both surfaces of an aluminum current collector (thickness: 12 um) serving as a positive electrode current collector with a loading amount of 537 mg/25 cm$^2$, which was then roll-pressed, and dried in a vacuum oven at 130°C for 10 hours to form a positive electrode active material layer (thickness: 65 um), which was manufactured as a positive electrode (thickness of positive electrode: 77 um, porosity: 26%).

A secondary battery was manufactured by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed in a volume ratio of 10:90, in an amount of 3 wt.% on the basis of a total weight of the electrolyte and adding $LiPF_6$ as a lithium salt to a concentration of 1M.

Monocells were manufactured in the same manner as in those described above except that the negative electrodes of the Examples and Comparative Examples were used, and were subjected to an evaluation of lifetime characteristics within the range of 4.2-3.0V.

## Experimental Example 1: Evaluation of Life Characteristics

For the secondary batteries including the negative electrodes manufactured in Examples and Comparative Examples, the life and capacity retention rate were evaluated using an electrochemical charging and discharging device. The secondary batteries were subjected to a cycle test at 4.2-3.0V 1C/0.5C, and the number of cycles at which the capacity retention rate reached 80% was measured.

capacity retention rate (%)={(discharge capacity in the Nth cycle)/(discharge capacity in the first cycle)}×100

The results are shown in Table 2 below.

## Experimental Example 2: Evaluation of Resistance Increase Rate Measurement

After the capacity retention rates were measured by charging/discharging the secondary batteries at 0.33C/0.33C (4.2-3.0V) every 50 cycles during the test in Experimental Example 1, the resistance increase rates were compared and analyzed by discharging the secondary batteries at 2.5C pulse in SOC50 to measure the resistance.

For the evaluation of the resistance increase rate measurement, data at 250 cycles was each calculated, and the results are shown in Table 2 below.

[Table 2]

| | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|
| Evaluatio | 223 | 218 | 212 | 208 | 205 | 227 | 229 | 187 | 190 | 200 | 203 | 157 |

| n of SOH 80% (cycle) life characteristic (4.2-3.0V) | | | | | | | | | | | | |
|---|---|---|---|---|---|---|---|---|---|---|---|---|
| Resistance increase rate (%, @250cycle, discharge) | 48 | 55 | 58 | 60 | 63 | 45 | 43 | 100 | 98 | 78 | 80 | 115 |

The negative electrode for a lithium secondary battery according to an exemplary embodiment of the present invention has a double layer structure, the porosity of the first negative electrode active material layer is 40% or less, and the porosity of the second negative electrode active material layer is greater than the porosity of the first negative electrode active material layer.

As can be seen in Example 1 of Table 2, it could be confirmed that as the negative electrode is composed of a double layer, the porosity of the first negative electrode active material layer facing the negative electrode current collector layer is lowered to a certain range to increase contact points with the negative electrode current collector layer, thereby improving adhesion and life characteristics, and the porosity of the second negative electrode active material layer is increased to a certain range to improve negative electrode tortuosity, thereby improving diffusion resistance. In particular, it could be confirmed that in the lithium secondary battery, while the porosities of the first and second layers are adjusted as described above, and at the same time, the specific conductive materials are included in the first and second layers, so that while the life characteristics of the existing lithium secondary battery are not significantly affected, points available for charging and discharging increase, resulting in excellent output characteristics at high C-rate.

For reference, it could be confirmed that in Examples 1 and 2, while maintaining the adhesion between the active material and the negative electrode current collector layer, the porosity of the surface portion that initially reacts with lithium is increased to improve diffusion characteristics, thereby improving the resistance increase rate and life characteristics.

In Examples 3 and 4, diffusion characteristics were improved by applying the large Si particles to the second negative electrode active material layer, but the performance was inferior to those of Examples 1 and 2 due to the rather large volume expansion. However, even in this case, excellent properties were exhibited, as compared with Comparative Examples 1 to 5.

In the case of Example 5, unlike Examples 1 to 4 and 6, the point-like conductive material was included alone. In general, silicon-containing active materials have a harder property than conductive materials. Therefore, when SWCNTs are used, as compared with point-like or planar conductive materials, the conductive material itself can be used less. This results in higher silicon content and less rolling, so the porosity range can be more easily adjusted to a larger extent.

In addition, in the case of Examples 6 and 7, the content of the binder was adjusted, in addition to the characteristics of the present invention. That is, the binder content was increased in the first negative electrode active material layer and the binder content was lowered in the second negative electrode active material layer. Accordingly, it could be confirmed that the separation phenomenon could be prevented, and accordingly, the life performance was greatly improved.

In Comparative Examples 1 and 2, the adhesion between the active material and the current collector was slightly lowered, and the diffusion characteristics of the surface portion were deteriorated, and the resistance increased as the cycle progressed, so the life characteristics were deteriorated, as compared with the Examples. In particular, in the case of Comparative Example 5, it could be confirmed that the contact with the negative electrode current collector layer was very poor, resulting in a large initial resistance increase and a rapid cycle drop.

**Claims**

1. A negative electrode for a lithium secondary battery, the negative electrode comprising:

   a negative electrode current collector layer;
   a first negative electrode active material layer provided on at least one surface of the negative electrode current collector layer; and
   a second negative electrode active material layer provided on a surface of the first negative electrode active material layer opposite to a surface of the first negative electrode active material layer facing the negative electrode current collector layer,
   wherein the first negative electrode active material layer has a porosity of 40% or less,
   the second negative electrode active material layer has a porosity greater than the porosity of the first negative electrode active material layer,
   the first negative electrode active material layer comprises a first negative electrode active material layer composition comprising a first negative electrode active material, a first negative electrode conductive material, and a first negative electrode binder,
   the second negative electrode active material layer comprises a second negative electrode active material layer composition comprising a second negative electrode active material, a second negative electrode conductive material, and a second negative electrode binder,
   the first negative electrode conductive material comprises two or more conductive materials, and
   the second negative electrode conductive material comprises one conductive material.

2. The negative electrode for the lithium secondary battery of claim 1, wherein the first negative electrode active material and the second negative electrode active material each comprise a silicon-containing active material comprising silicon particles having a silicon particle size distribution of 0.01 um or greater and 50 um or less, and
   the silicon-containing active material comprised in the first negative electrode active material layer has a D50 particle size equal to or smaller than a D50 particle size of the silicon-containing active material comprised in the second negative electrode active material layer.

3. The negative electrode for the lithium secondary battery of claim 2, wherein the D50 particle size of the silicon-containing active material comprised in the first negative electrode active material layer is 5 $\mu$m or less, and
   the D50 particle size of the silicon-containing active material comprised in the second negative electrode active material layer is 5 $\mu$m or greater.

4. The negative electrode for the lithium secondary battery of claim 2, wherein the silicon-containing active materials comprise one or more selected from the group consisting of SiOx (0<x<2), SiOx (x=0), SiC, and a Si alloy.

5. The negative electrode for the lithium secondary battery of claim 4, wherein the silicon-containing active materials comprise one or more selected from the group consisting of SiOx (x=0) and SiOx (0<x<2) and comprises 95 parts by weight or more of the SiOx (x=0) on a basis of 100 parts by weight of the silicon-containing active material.

6. The negative electrode for the lithium secondary battery of claim 1, wherein the first negative electrode active material is comprised in an amount of 80 parts by weight or less on a basis of 100 parts by weight of the first negative electrode active material layer composition, and
the second negative electrode active material is comprised in an amount of 80 parts by weight or more on a basis of 100 parts by weight of the second negative electrode active material layer composition.

7. The negative electrode for the lithium secondary battery of claim 1, wherein the first negative electrode conductive material comprises one or more selected from the group consisting of a point-like conductive material, a linear conductive material, and a planar conductive material, and
the second negative electrode conductive material comprises a linear conductive material.

8. The negative electrode for the lithium secondary battery of claim 1, wherein a thickness of the first negative electrode active material layer is 10 um or greater and 200 $\mu$m or less, and
a thickness of the second negative electrode active material layer is 10 um or greater and 100 $\mu$m or less.

9. The negative electrode for the lithium secondary battery of claim 1, wherein a loading amount (a) of the first negative electrode active material layer composition satisfies two times or more than a loading amount (b) of the second negative electrode active material layer composition.

10. A method for manufacturing a negative electrode for a lithium secondary battery, the method comprising:

preparing a negative electrode current collector layer;
forming a first negative electrode active material layer by applying a first negative electrode active material layer composition on at least one surface of the negative electrode current collector layer; and
forming a second negative electrode active material layer by applying a second negative electrode active material layer composition on a surface of the first negative electrode active material layer opposite to a surface of the first negative electrode active material layer facing the negative electrode current collector layer,
wherein the first negative electrode active material layer has a porosity of 40% or less,
the second negative electrode active material layer has a porosity greater than the porosity of the first negative electrode active material layer,
the first negative electrode active material layer comprises a first negative electrode active material layer composition comprising a first negative electrode active material, a first negative electrode conductive material, and a first negative electrode binder,
the second negative electrode active material layer comprises a second negative electrode active material layer composition comprising a second negative electrode active material, a second negative electrode conductive material, and a second negative electrode binder,
the first negative electrode conductive material comprises two or more conductive materials, and
the second negative electrode conductive material comprises one conductive material.

11. The method of claim 10, wherein the forming of the second negative electrode active material layer on the first negative electrode active material layer comprises a wet-on-dry process or a wet-on-wet process.

12. A lithium secondary battery comprising:

a positive electrode;
the negative electrode for the lithium secondary battery of any one of claims 1 to 9;
a separator provided between the positive electrode and the negative electrode; and
an electrolyte.

[Figure 1]

## INTERNATIONAL SEARCH REPORT

International application No.

**PCT/KR2023/008717**

| A. | CLASSIFICATION OF SUBJECT MATTER |
|---|---|

**H01M 4/134**(2010.01)i; **H01M 4/38**(2006.01)i; **H01M 4/62**(2006.01)i; **H01M 4/1395**(2010.01)i; **H01M 4/04**(2006.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/134(2010.01); H01M 10/052(2010.01); H01M 10/0525(2010.01); H01M 4/02(2006.01); H01M 4/133(2010.01); H01M 4/36(2006.01); H01M 4/38(2006.01); H01M 4/587(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지용 음극(lithium secondary battery anode), 집전체(current collector), 실리콘계 활물질(silicon active material), 도전재(conductive material), 공극률(porosity)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2014-0080837 A (HANBAT NATIONAL UNIVERSITY INDUSTRY-ACADEMIC COOPERATION FOUNDATION) 01 July 2014 (2014-07-01)<br>See paragraphs [0022], [0028], [0036]-[0037], [0040]-[0043], [0045] and [0050]; and claims 1-2, 4 and 10-11. | 1-5,7-12 |
| Y | | 6 |
| Y | JP 2005-209496 A (MATSUSHITA ELECTRIC IND. CO., LTD.) 04 August 2005 (2005-08-04)<br>See paragraphs [0016] and [0054]; and claims 1 and 3. | 6 |
| A | KR 10-2017-0107213 A (LG CHEM, LTD.) 25 September 2017 (2017-09-25)<br>See entire document. | 1-12 |
| A | KR 10-2021-0044384 A (HYUNDAI MOTOR COMPANY et al.) 23 April 2021 (2021-04-23)<br>See entire document. | 1-12 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 October 2023** | **04 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/008717**

**C.    DOCUMENTS CONSIDERED TO BE RELEVANT**

| Category* | Citation of document, with indication, where appropriate, of the relevant passages | Relevant to claim No. |
|---|---|---|
| A | JP 2016-058309 A (TOYOTA MOTOR CORP.) 21 April 2016 (2016-04-21)<br>See entire document. | 1-12 |

Form PCT/ISA/210 (second sheet) (July 2022)

<div align="center">

**INTERNATIONAL SEARCH REPORT**
Information on patent family members

</div>

| International application No. |
| --- |
| **PCT/KR2023/008717** |

| Patent document cited in search report | | | Publication date (day/month/year) | Patent family member(s) | | | Publication date (day/month/year) |
| --- | --- | --- | --- | --- | --- | --- | --- |
| KR | 10-2014-0080837 | A | 01 July 2014 | KR | 10-1478814 | B1 | 05 January 2015 |
| JP | 2005-209496 | A | 04 August 2005 | None | | | |
| KR | 10-2017-0107213 | A | 25 September 2017 | None | | | |
| KR | 10-2021-0044384 | A | 23 April 2021 | US | 2021-0111409 | A1 | 15 April 2021 |
| JP | 2016-058309 | A | 21 April 2016 | CN | 106716688 | A | 24 May 2017 |
| | | | | CN | 106716688 | B | 09 March 2021 |
| | | | | JP | 6237546 | B2 | 29 November 2017 |
| | | | | KR | 10-1898104 | B1 | 12 September 2018 |
| | | | | KR | 10-2017-0042679 | A | 19 April 2017 |
| | | | | US | 10651460 | B2 | 12 May 2020 |
| | | | | US | 2017-0256788 | A1 | 07 September 2017 |
| | | | | WO | 2016-038440 | A1 | 17 March 2016 |

Form PCT/ISA/210 (patent family annex) (July 2022)

**EP 4 439 705 A1**

**Patent documents cited in the description**

- KR 1020220076797

- JP 2009080971 A